# EUROPÄISCHE PATENTANMELDUNG

(11) **EP 4 696 927 A1**
(43) Veröffentlichungstag der Anmeldung: **18.02.2026**
(21) Anmeldenummer: 24194149.1
(22) Anmeldetag: 12.08.2024
(51) Int. Cl.: F21S 43/20, F21V 8/00, G02B 30/27, G09F 19/14

(54) **KRAFTFAHRZEUGBAUTEIL**

(71) Anmelder: WEIDPLAS GmbH, 8630 Rüti (CH)
(72) Erfinder: QUIRING, Johannes, 59505 Bad Sassendorf (DE); KURZ, Alexander, 66663 Merzig (DE); KINDL, Christoph, 66386 St. Ingbert (DE); BÖLSTERI, Christian, 8627 Grüningen (CH)
(74) Vertreter: Rutz, Andrea

(57) **Zusammenfassung**

Es wird ein Kraftfahrzeugbauteil (1) mit einer Sichtseite (101) und einer Rückseite (102) angegeben, das einen Lichtleiter (11), eine Lentikularlinsenstruktur (12) sowie ein Lentikularbild (13) aufweist. Die Lentikularlinsenstruktur (12) hat eine Vielzahl von Linsen (121), welche zur Sichtseite (101) hin jeweils konvex ausgebildet sind. Das Lentikularbild (13) ist rückseitig und korrespondierend zur Lentikularlinsenstruktur (12) angeordnet und weist mindestens zwei ineinander verschachtelte Bilder (131, 132, 133) auf zum Bewirken eines dreidimensionalen Effekts, einer Bewegung und/oder eines Bildwechsels. Das Lentikularbild (13) wird mittels Lichtumlenkstrukturen (141, 143) gebildet, welche am und/oder im Lichtleiter (11) vorgesehen sind. Ausserdem wird ein Verfahren zur Herstellung eines derartigen Kraftfahrzeugbauteils (1) angegeben.

## Beschreibung

### TECHNISCHES GEBIET

Die vorliegende Erfindung betrifft ein Kraftfahrzeugbauteil, wie insbesondere ein Dekor- oder Zierelement, bei dem es sich zum Beispiel um eine Zierleiste oder eine Türleiste handeln kann. Die Erfindung betrifft ausserdem ein Kraftfahrzeug mit einem derartigen Kraftfahrzeugbauteil sowie ein Verfahren zur Herstellung eines Kraftfahrzeugbauteils.

### STAND DER TECHNIK

Bei Kraftfahrzeugen ist es bekannt, im Innen- oder Aussenraum Dekor-, Anzeige- und Zierelemente vorzusehen, um zum Beispiel die Wahrnehmung der Insassen, aber auch von anderen Personen, zu lenken. So werden oft hinterleuchtbare Dekorelemente und Zierleisten verwendet, um zum Beispiel in Form einer Türeinstiegsleiste auf den Markennamen des Kraftfahrzeugs hinzuweisen, oder um einen speziellen Effekt zu bewirken und dabei die Wahrnehmung des Betrachters auf sich zu ziehen. Auch Bedien- und Betätigungselemente werden oft mit Anzeige- und Ausleuchtelementen versehen, die von einer rückseitig angeordneten Lichtquelle beleuchtet werden, um die Erkennbarkeit der einzelnen Bedien- und Betätigungselemente insbesondere auch bei Nacht zu gewährleisten.

Hinterleuchtbare Bauteile von Kraftfahrzeugen sind beispielsweise in unterschiedlichen Ausführungsformen aus den Dokumenten EP 4 261 246 A1, EP 3 792 111 A1, WO 2021/013619 A1, WO 2021/013620 A1, WO 2020/239688 A1, WO 2019/223989 A1, EP 3 326 863 A1, WO 2017/174548 A1, EP 2 853 806 A1 und WO 2014/122078 A1 bekannt, welche alle auf dieselbe Anmelderin lauten, wie das vorliegende Dokument.

Ferner sind im Bereich von Wertdokumenten Sicherheitsmerkmale bekannt, welche auf einem optisch variablen Effekt basieren, der mittels einer Lentikularlinsenstruktur erzeugt wird. Derartige Wertdokumente sind beispielsweise im Dokument WO 2023/016670 A1 offenbart.

Auch ist es seit längerem bekannt, mittels einer Lentikularlinsenstruktur erzeugte Wechselbilder sowie animierte oder dreidimensional wirkende Bilder zum Beispiel auf Postkarten zu drucken, um beim Betrachter einen besonderen optischen Effekt zu bewirken.

### DARSTELLUNG DER ERFINDUNG

Es ist eine Aufgabe der vorliegenden Erfindung, ein einfach herstellbares Kraftfahrzeugbauteil anzugeben, welches die Aufmerksamkeit des Betrachters auf sich zieht.

Zur Lösung dieser Aufgabe wird ein Kraftfahrzeugbauteil vorgeschlagen, wie es in Anspruch 1 angegeben ist. Ausserdem wird in Anspruch 13 ein Kraftfahrzeug mit einem derartigen Kraftfahrzeugbauteil angegeben und in Anspruch 14 ein Verfahren zur Herstellung eines solchen Kraftfahrzeugbauteils. Bevorzugte Ausführungsformen sind in den abhängigen Ansprüchen angegeben.

Die vorliegende Erfindung stellt also ein Kraftfahrzeugbauteil mit einer Sichtseite und einer Rückseite zur Verfügung, aufweisend
einen Lichtleiter,
eine Lentikularlinsenstruktur mit einer Vielzahl von Linsen, welche zur Sichtseite hin jeweils konvex ausgebildet sind, sowie
ein rückseitig und korrespondierend zur Lentikularlinsenstruktur angeordnetes Lentikularbild mit mindestens zwei ineinander verschachtelten Bildern zum Bewirken eines dreidimensionalen Effekts, einer Bewegung und/oder eines Bildwechsels.

Das Lentikularbild wird mittels Lichtumlenkstrukturen gebildet, welche am und/oder im Lichtleiter vorgesehen sind.

Das durch die Lichtumlenkstrukturen gebildete Lentikularbild bewirkt beim Betrachter des Bauteils einen besonderen optischen Effekt und zieht dadurch unmittelbar seine Aufmerksamkeit auf sich. Beispielsweise kann das Lentikularbild einen dreidimensionalen Effekt bewirken, so dass zum Beispiel ein Logo, ein Symbol, ein Buchstabe, eine Zahl, ein Schriftzug, eine Marke, ein Piktogramm und/oder eine abstrakte Graphik mit einer räumlichen Wirkung dargestellt werden können. Alternativ kann eine fortlaufende Bildfolge dargestellt werden, so dass der Betrachter beim Bewegen seines Kopfes relativ zum Bauteil eine animierte Bewegungsabfolge wahrnimmt. Gemäss einer weiteren Alternative können je nach Blickrichtung unterschiedliche Bilder dargestellt werden. Für den Betrachter sind derartige optische Effekte bei einem Kraftfahrzeug in der Regel unerwartet, was zum Lenken seiner Aufmerksamkeit ausgenutzt werden kann.

Indem Lichtumlenkstrukturen das Lentikularbild bilden, welche am und/oder im Lichtleiter vorgesehen sind, kann das Lentikularbild nicht nur fest an den Lichtleiter angebunden bzw. sogar durch diesen gebildet werden, sondern auch besonders präzise am Lichtleiter und bzgl. der Lentikularlinsenstruktur angeordnet und ausgerichtet werden. Die Lichtumlenkstrukturen sind bevorzugt unverrückbar am und/oder im Lichtleiter angeordnet. Die Anordnung und Ausrichtung des Lentikularbildes relativ zur Lentikularlinsenstruktur ist wichtig, um einen aus Sicht des Betrachters überzeugenden optischen Effekt zu erreichen. Um beispielsweise eine erkennbare Verzerrung eines dreidimensional erscheinenden Bildes zu vermeiden, ist bei der Anordnung des Lentikularbildes relativ zur Lentikularlinsenstruktur üblicherweise eine maximale Toleranz von 1µm einzuhalten. Durch die Verwendung von Lichtumlenkstrukturen zur Ausbildung des Lentikularbildes kann zudem die Lichtweiterleitung und insbesondere -auskopplung im bzw. aus dem Lichtleiter optimal gesteuert werden. So kann dadurch zum Beispiel die für den Betrachter wahrgenommene Helligkeit und/oder Helligkeitsverteilung insbesondere auch in Fällen über die Sichtseite hinweg wunschgemäss eingestellt werden, bei denen das Licht ungleichmässig in den Lichtleiter eingekoppelt wird. Oder aber es können durch Erzeugen von z.B. ungleichmässigen oder besonderen Helligkeitsverteilungen weitere optische Effekte bewirkt werden, um die Aufmerksamkeit des Betrachters noch besser zu lenken.

Eine Lichtumlenkstruktur ist eine Struktur, welche dazu geeignet ist, auftreffende Lichtstrahlen umzulenken. Die Umlenkung kann dabei gezielt oder ungezielt sein. Im Falle einer gezielten Umlenkung kann diese insbesondere in Richtung der Sichtseite erfolgen. Die gezielte Umlenkung erfolgt bevorzugt in Richtung zu einer oder zu mehreren Linsen der Lentikularlinsenstruktur hin. Je nachdem kann die gezielte Umlenkung aber auch in eine beliebige andere Richtung erfolgen, wie zum Beispiel zur Rückseite oder zu einer Seite hin. Im Falle einer ungezielten Umlenkung kann die entsprechende Lichtumlenkstruktur insbesondere eine diffuse Umlenkung der eintreffenden Lichtstrahlen bewirken. Während eine gezielte Umlenkung von Lichtstrahlen zur Lentikularlinsenstruktur in der Regel an der entsprechenden Stelle aus Sicht des Betrachters zu einer erhöhten Helligkeit führt, bewirken eine Umlenkung zur Rückseite oder zu einer Seite hin oder eine diffuse Umlenkung eher eine verringerte Helligkeit an der entsprechenden Stelle der Sichtseite. Alternativ oder zusätzlich können unterschiedliche Helligkeiten an der Sichtseite zum Beispiel auch dadurch erreicht werden, dass die Dichte an Lichtumlenkstrukturen, welche das eintreffende Licht gezielt zur Sichtseite hin umlenken, variiert wird. Indem eine Vielzahl von Lichtumlenkstrukturen aufgrund ihrer Ausbildung und/oder Dichte die Helligkeitswerte eines Graustufenbildes wiedergeben, kann ein solches am Kraftfahrzeugbauteil dargestellt und vom Betrachter erkannt werden.

Beim Kraftfahrzeug handelt es sich bevorzugt um ein Auto, einen Lastwagen, ein Schiff, einen Zug oder um ein Flugzeug, bevorzugter um ein Auto. Das Kraftfahrzeugbauteil kann ein Interieurbauteil zur Anordnung im Fahrgastraum eines Kraftfahrzeugs sein oder ein Exterieurbauteil zur Anordnung an der Aussenseite eines Kraftfahrzeugs. Das Bauteil kann insbesondere ein Zierelement sein, wie zum Beispiel eine Zierleiste oder eine Türleiste. Insbesondere kann das Kraftfahrzeugbauteil eine Fuss- oder Einstiegsleiste bilden, welche im Bereich der Türe eines Kraftfahrzeugs, insbesondere eines Autos, angeordnet wird und dort zur Kennzeichnung der Höhe der Einstiegsschwelle oder zur Angabe eines Markennamens dient. Das Kraftfahrzeugbauteil kann aber auch ein Bedienelement oder einen Teil eines solchen bilden. Das Bedienelement kann zum Beispiel eine Taste oder ein Schalter sein. Des Weiteren kann das Kraftfahrzeugbauteil zum Beispiel ein Frontpanel insbesondere eines Elektro- oder Verbrennerkraftfahrzeugs bilden, um dort beispielsweise eine Automarke und/oder eine Firmen- oder Fahrzeugmodell-Kennzeichnung darzustellen.

Der Lichtleiter ist üblicherweise und bevorzugt aus einem festen Material hergestellt, wobei grundsätzlich auch eine Herstellung aus einem flüssigen Material denkbar wäre. Bevorzugt ist der Lichtleiter aus einem Kunststoff hergestellt, wobei es sich beim Kunststoff insbesondere um Silikon, insbesondere Silkonkautschuk, oder um ein thermoplastisches Elastomer handeln kann. Ausführungsformen sind aber auch möglich, bei denen der Lichtleiter zum Beispiel aus Polycarbonat (PC), Polymethylmethacrylat (PMMA), Polyethylen (PE), Polyurethan (PU), Polyurea (PUA), Polymethacrylmethylimid (PMMI), Polypropylen (PP), Polystyrol (PS) oder Polyvinylchlorid (PVC) hergestellt ist. Alternativ kann der Lichtleiter aber auch aus Glas hergestellt sein. Der Lichtleiter kann insbesondere im Spritzgussverfahren hergestellt sein. Der Lichtleiter ist bevorzugt, aber nicht zwingend, als Ganzes einstückig hergestellt. Der Lichtleiter kann starr ausgebildet sein, was insbesondere in der Regel der Fall ist, wenn er im Spritzgussverfahren hergestellt ist. Eine starre Ausbildung kann den Vorteil mit sich bringen, dass der Lichtleiter eine Eigenstabilität hat und dadurch für das Kraftfahrzeugbauteil insbesondere als Trägerschicht dienen oder zumindest beitragen kann. Es sind jedoch auch Ausführungsformen denkbar, bei denen der Lichtleiter durch eine Folie, also ein flexibles Flächengebilde, ausgebildet ist. Der Lichtleiter bildet bevorzugt eine Schicht des Kraftfahrzeugbauteils, das heisst er hat in diesem Fall in der Regel eine im Vergleich zur Dicke um ein Vielfaches grössere Längs- und Breitenerstreckung.

Die Lentikularlinsenstruktur ist in der Regel aus einem festen Material und bevorzugt als Ganzes einstückig hergestellt. Gemäss einer bevorzugten Ausführungsform weist die Lentikularlinsenstruktur eine Vielzahl von sich parallel zueinander erstreckenden Linsen auf, welche jeweils zur Sichtseite hin gewölbt, das heisst konvex, ausgebildet sind. Die Linsen weisen bevorzugt jeweils eine Längsrichtung auf, entlang welcher der Linsenquerschnitt unverändert ist. Die Linsen können mit ihrer zur Sichtseite hin gewölbten Aussenfläche insbesondere jeweils einen Teil einer Zylinderfläche bilden, wobei sich die Längsmittelachse des Zylinders entlang der Längsrichtung der jeweiligen Linse erstreckt. Entlang dieser Längsrichtung erstrecken sich die Linsen bevorzugt parallel zueinander. Vorteilhaft grenzen die Linsen dabei jeweils unmittelbar aneinander an, das heisst die durch die Linsen gebildeten Wölbungen sind unmittelbar angrenzend zueinander angeordnet.

Um aus Sicht des Betrachters eine homogen ausgebildete Sichtseite zu bilden, weist die Lentikularlinsenstruktur pro 1 Inch (2.54 cm) bevorzugt 40 bis 200 parallel zueinander angeordnete streifenförmige Linsen auf. Die streifenförmigen Linsen der Lentikularlinsenstruktur weisen bevorzugt jeweils eine Breite von 0.1 mm bis 1 mm auf.

Statt teilzylinderförmige Linsen kann die Lentikularlinsenstruktur zum Beispiel auch Linsen aufweisen, die jeweils eine halb- oder teilkugelförmige Oberfläche bilden. Während bei den oben erwähnten teilzylindrischen Linsen ein Bildwechsel nur bei einer Änderung der Betrachtungsposition senkrecht zur Linsenerstreckung möglich ist, sind Bildwechsel bei halb- oder teilkugelförmigen Linsen in sämtliche Richtungen möglich. Um die halb- oder teilkugelförmigen Linsen räumlich zueinander optimal zu positionieren, können diese in der Draufsicht insbesondere polygonal, bevorzugt hexagonal, bevorzugter regelmässig hexagonal, geformt sein, so dass sich aneinander angrenzende Linsen gegenseitig an allen Seiten berühren können.

Zusammen mit dem Lentikularbild bewirkt die Lentikularlinsenstruktur somit einen Lentikulareffekt, welcher in der Fachwellt manchmal auch als Linsenrastereffekt bezeichnet wird. Der Lentikulareffekt beschreibt die beim Betrachter durch die Kombination von Lentikularlinsenstruktur und Lentikularbild besondere optische Wirkung, bei welcher es sich beispielsweise um einen dreidimensionalen Effekt, eine Bewegung und/oder einen Bildwechsel handeln kann. Um einen Lentikulareffekt zu bewirken, ist das Lentikularbild in der Regel auf die Lentikularlinsenstruktur abgestimmt, das heisst korrespondiert mit dieser. Die im Lentikularbild verschachtelten Bilder können hierzu insbesondere in Form von streifenförmigen Bildteilen vorgesehen sein, welche bzgl. ihrer Dimensionierung, das heisst Breite und bevorzugt Länge, sowie Anordnung, das heisst insbesondere der parallelen Erstreckung zueinander, den von der Lentikularlinsenstruktur gebildeten Linsen entsprechen.

Das Lentikularbild weist somit mindestens zwei ineinander verschachtelte Bilder auf und wird bevorzugt durch diese gebildet. Aufgrund der Lentikularlinsenstruktur ist für den Betrachter je nach Position und Blickrichtung auf das Kraftfahrzeugbauteil dann zum Beispiel nur ein einzelnes dieser Bilder sichtbar. Da aufgrund der Lentikularlinsenstruktur die dazwischen angeordneten Bildteile der anderen Bilder vom Betrachter nicht sichtbar sind, erscheinen die Bildteile des sichtbaren Bildes als ein zusammenhängendes ganzes Bild. Indem jeweils nur ein einzelnes der ineinander verschachtelten Bilder sichtbar ist, kann bei einer Änderung der Position des Betrachters relativ zum Kraftfahrzeugbauteil für den Betrachter der Eindruck eines Bildwechsels und/oder einer Bewegung im Bild erzeugt werden. Wenn bzgl. der Sichtbarkeit der ineinander verschachtelten Bilder des Lentikularbildes bei der Ausgestaltung der Lentikularlinsenstruktur und des Lentikularbildes ausserdem der Abstand der beiden Augen des Betrachters mitberücksichtigt wird, kann die Sichtbarkeit der Bilder gerade so eingestellt werden, dass das eine Auge ein erstes Bild und das andere Auge ein zweites Bild des Lentikularbildes erkennt. Bei geeigneter stereoskopischer Aufnahme dieser beiden Bilder kann dadurch beim Betrachter ein dreidimensionaler Effekt erzeugt werden.

Gemäss einer bevorzugten Ausführungsform werden die Linsen der Lentikularlinsenstruktur durch eine mehrfach, und bevorzugt in regelmässigen Abständen zur Sichtseite hin gewölbte Aussenfläche eines Lichtleiters gebildet. Beim Lichtleiter kann es sich dabei insbesondere um den bereits genannten Lichtleiter handeln. Das heisst, der Lichtleiter und die Lentikularlinsenstruktur können insbesondere und bevorzugt gemeinsam einstückig ausgebildet sein bzw. der Lichtleiter kann selbst die Lentikularlinsenstruktur bilden. Dadurch kann eine weitgehend verlustfreie Lichtleitung vom Lichtleiter zur Lentikularlinsenstruktur erreicht und die Herstellung des Kraftfahrzeugbauteils vereinfacht werden. Alternativ kann die Lentikularlinsenstruktur aber auch durch einen weiteren Lichtleiter gebildet werden, der in einem Abstand oder unmittelbar angrenzend zum anderen Lichtleiter angeordnet sein kann.

Das in den Lichtleiter eingestrahlte Licht kann grundsätzlich von einer beliebigen Lichtquelle stammen. Es kann insbesondere aus dem Umgebungslicht stammen, das heisst es kann sich zum Beispiel um Sonnenlicht und/oder um das Licht einer externen künstlichen Lichtquelle handeln. Bevorzugt weist das Kraftfahrzeugbauteil jedoch eines oder mehrere Leuchtelemente, insbesondere eine oder mehrere Leuchtdioden, auf zum Einstrahlen von Licht in den Lichtleiter. Die eine oder die mehreren Leuchtdioden sind bevorzugt aktiv betätigbar, das heisst können bei Bedarf ein- oder ausgeschaltet werden. Das Vorsehen von einem oder mehreren Leuchtelementen bewirkt eine bessere Wahrnehmung beim Betrachter, insbesondere bei Dunkelheit bzw. bei ansonsten schlechter Beleuchtung, und ermöglicht zudem eine genau einstellbare Hinterleuchtung des Kraftfahrzeugbauteils.

Gemäss einer Weiterbildung der Erfindung sind das eine oder die mehreren Leuchtelemente jeweils dazu ausgebildet, das Licht seitlich in den Lichtleiter einzustrahlen. Auf diese Weise kann eine gute Ausleuchtung des Bauteils bewirkt und mit Hilfe der Lichtumlenkstrukturen der gewünschte optische Effekt einfach und wirkungsvoll erreicht werden. Durch eine Anordnung von dem oder den Leuchtelementen seitlich zum Lichtleiter und/oder zur Lentikularlinsenstruktur kann zudem die Bauhöhe des Kraftfahrzeugbauteils verringert werden.

Gemäss einer bevorzugten Ausführungsform werden die Lichtumlenkstrukturen durch den Lichtleiter, insbesondere durch das Material, aus welchem der Lichtleiter hergestellt ist, gebildet. Sie können zum Beispiel durch lokale Erhebungen und/oder Vertiefungen einer Oberfläche, insbesondere der Rückseite, des Lichtleiters gebildet werden. Alternativ oder zusätzlich können die Lichtumlenkstrukturen auch durch eine lokale Materialveränderung desjenigen Materials gebildet werden, aus welchem der Lichtleiter hergestellt ist. Die Materialveränderung kann dabei physikalischer und/oder chemischer Natur sein. So kann eine Materialveränderung zur Ausbildung einer Lichtumlenkstruktur zum Beispiel durch eine lokale Materialverdichtung oder -verdünnung oder durch eine lokale Materialaufschmelzung ausgebildet sein. Indem die Lichtumlenkstrukturen durch den Lichtleiter gebildet werden, ist deren Anordnung in Bezug auf die Lentikularlinsenstruktur besonders genau definiert, insbesondere wenn die Lentikularlinsenstruktur einstückig mit dem Lichtleiter hergestellt ist. Das Erreichen des gewünschten optischen Effekts kann dadurch sichergestellt werden. Je nach Ausführungsform kann sogar das Kraftfahrzeugbauteil als Ganzes einstückig hergestellt sein.

Die Dicke der Bauteilkomponente aufweisend die Lentikularlinsenstruktur, den Lichtleiter und das Lentikularbild liegt bevorzugt in einem Bereich von 1 mm bis 5 mm.

Insbesondere bevorzugt ist eine Ausführungsform, bei der die Lichtumlenkstrukturen durch lokale Erhebungen und/oder Vertiefungen einer Oberfläche, insbesondere der Rückseite, des Lichtleiters gebildet werden. Das Lentikularbild wird in diesem Fall also durch eine reliefartige Struktur einer Oberfläche, insbesondere der Rückseite, des Lichtleiters gebildet. Da die Oberflächen, das heisst Aussenflächen, des Lichtleiters üblicherweise jeweils sowieso eine optische Grenzfläche bilden, kann eine solche Oberfläche mittels Vorsehen der lokalen Erhebungen und/oder Vertiefungen besonders einfach dazu genutzt werden, die Lichtumlenkstrukturen zu bilden.

Der Lichtleiter und die Lichtumlenkstrukturen sind bevorzugt gemeinsam im Spritzgussverfahren hergestellt. Auf diese Weise können der Lichtleiter und das durch die Lichtumlenkstrukturen gebildete Lentikularbild besonders einfach und schnell gemeinsam hergestellt werden. Ausserdem kann bei einer Herstellung im Spritzgussverfahren eine hohe Oberflächengüte erreicht werden. Vorzugsweise wird hierzu eine Spritzgussform verwendet, welche die lokalen Erhebungen und/oder Vertiefungen als Negativform aufweist. Beim Auffüllen der durch die Spritzgussform gebildeten Kavität mit dem Spritzgussmaterial wird dadurch nicht nur die grundsätzliche Form des Lichtleiters festgelegt, sondern auch diejenige der Lichtumlenkstrukturen. Besonders bevorzugt werden der Lichtleiter, die Lichtumlenkstrukturen sowie die Lentikularlinsenstruktur gemeinsam im Spritzgussverfahren hergestellt.

Alternativ oder zusätzlich können die Lichtumlenkstrukturen auch mittels eines Lasers und/oder mittels Einpressen eines Stempels hergestellt sein. Beim Laser kann es sich insbesondere um einen Ultrakurzpulslaser, einen Femtosekundenlaser oder einen Pikosekundenlaser handeln. Bei Verwendung eines Lasers können die Lichtumlenkstrukturen insbesondere mittels lokaler Materialveränderungen, das heisst bevorzugt lokaler Materialaufschmelzungen, hergestellt werden. Die Verwendung eines Lasers hat den Vorteil, dass die Lichtumlenkstrukturen zur Ausbildung des Lentikularbildes wahlweise an der Oberfläche und/oder im Inneren des Lichtleiters ausgebildet werden können. Ein Laser ermöglicht zudem eine sehr genaue Ausbildung und insbesondere eine sehr präzise Anordnung der Lichtumlenkstrukturen.

Mittels des Lasers können die Lichtumlenkstrukturen zudem individuell bzgl. ihrer Dimensionierung, Abstrahlcharakteristik und Anordnung angepasst werden: Allfällige Fehler bei der Herstellung des Lichtleiters und/oder der Lentikularlinsenstruktur, wie zum Beispiel ein entformungsbedingter oder durch Temperaturschwankungen entstandener Verzug des im Spritzgussverfahrens hergestellten Lichtleiters und/oder der Lentikularlinsenstruktur, können leicht zu einer Verzerrung des vom Betrachter wahrgenommenen dreidimensionalen Bildes führen. Durch entsprechende Anpassung der Lichtumlenkstrukturen können derartige Fehler aber einfach ausgeglichen werden, so dass der Fehler für den Betrachter optisch keine oder kaum Auswirkungen hat. Für eine solche Anpassung müssen einfach die Standardlasersteuerungsparameter entsprechend verändert werden.

Bei Verwendung eines Stempels kann dieser insbesondere als Negativform ausgebildete lokale Erhebungen und/oder Vertiefungen aufweisen, welche beim Einpressen des Stempels in den Lichtleiter zum Ausbilden der Lichtumlenkstrukturen an einer Oberfläche des Lichtleiters dienen.

Als weitere Möglichkeit zur Ausbildung der Lichtumlenkstrukturen kann ein lichtdurchlässiger Lack auf den Lichtleiter aufgebracht werden. Die Lichtumlenkstrukturen werden dann zum Beispiel mittels einer Walze in den Lack eingeprägt. Anschliessend kann der Lack zum Beispiel mittels UV-Licht verfestigt werden. Als nochmals weitere Möglichkeiten können die Lichtumlenkstrukturen in den Lichtleiter eingeprägt, auf diesen aufgegossen oder aufgedruckt werden.

Besonderes bevorzugt wird eine Anordnung umfassend den Lichtleiter und die Lentikularlinsenstruktur gemeinsam im Spritzguss hergestellt und die Lichtumlenkstrukturen am und / oder im Lichtleiter dieser Anordnung mittels Laser hergestellt. Dies bietet den Vorteil, dass die Lentikularlinsenstruktur eine gute Oberflächengüte aufweist und die Lichtumlenkstrukturen optisch optimal bezüglich dem Lichtleiter sowie der Lentikularlinsenstruktur hergestellt und/oder abgestimmt werden können. Der Einsatz des Spritzgusses ermöglicht zudem eine kostengünstige Herstellung.

Zumindest eines, bevorzugt alle, der mindestens zwei ineinander verschachtelten Bilder stellen bevorzugt ein Logo, wie insbesondere eine Kraftfahrzeugmarke, dar. Das Kraftfahrzeugbauteil dient in diesem Fall insbesondere dazu, die Aufmerksamkeit des oder der Benutzer des Kraftfahrzeugs auf das Logo bzw. die Kraftfahrzeugmarke zu lenken und diese vorteilhaft zu präsentieren. Alternativ oder zusätzlich können zumindest eines, bevorzugt alle, der mindestens zwei ineinander verschachtelten Bilder auch einen Schriftzug, ein Symbol und/oder ein Bild darstellen.

Gemäss einer Weiterbildung der Erfindung weist das Kraftfahrzeugbauteil ausserdem zusätzliche Lichtumlenkstrukturen auf, die im Inneren des Lichtleiters angeordnet sind. Diese zusätzlichen Lichtumlenkstrukturen können insbesondere dazu dienen, die Lichtabstrahlung des Kraftfahrzeugbauteils zu verbessern und/oder um weitere optische Lichteffekte zu erzielen. Beispielsweise können die zusätzlichen Lichtumlenkstrukturen dazu dienen, das bzw. die vom Betrachter wahrgenommenen Bilder oder Teile davon hervorzuheben, indem sie diese zum Beispiel umstrahlen oder mit punktuellen Glanzlichtern versehen. Die im Inneren des Lichtleiters vorgesehenen zusätzlichen Lichtumlenkstrukturen können insbesondere auf einer oder mehreren Ebenen angeordnet sein, die sich von der Ebene des Lentikularbildes unterscheiden, um dadurch für den Betrachter einen dreidimensionalen Effekt bzw. eine Tiefenwirkung zu erzeugen.

Die Linsen der Lentikularlinsenstruktur können derart angeordnet und/oder ausgestaltet sein, dass sie jeweils einzeln und/oder gemeinsam ein Symbol und/oder einen Schriftzug bilden. Zusammen mit dem Lentikularbild können dadurch beim Betrachter weitere besondere optische Eindrücke erzeugt werden.

Die Sichtseite des Kraftfahrzeugbauteils kann allein durch die Lentikularlinsenstruktur gebildet sein. Die Lentikularlinsenstruktur kann dabei mit ihrer Oberfläche die dem Betrachter zugewandte Vorderseite des Kraftfahrzeugbauteils bilden. Alternativ kann die dem Betrachter zugewandte Vorderseite der Lentikularlinsenstruktur auch stellenweise oder vollständig mit einer Schutzschicht oder einer anderen Schicht überzogen sein. Die Schutzschicht und die andere Schicht können insbesondere aus einem Lack, bevorzugt aus einem lichtdurchlässigen Lack, hergestellt sein. Gemäss einer weiteren Alternative wird die Sichtseite des Kraftfahrzeugbauteils bevorzugt durch ein transluzentes oder transparentes Abdeckelement gebildet, welches die Lentikularlinsenstruktur stellenweise oder vollständig abgedeckt.

Der Lichtleiter und/oder die Lentikularlinsenstruktur und/oder, falls vorhanden, die Schutz- und/oder andere Schicht kann bzw. können insbesondere vollständig lichtdurchlässig ausgebildet sein. Alternativ kann auch der Lichtleiter und/oder die Lentikularlinsenstruktur und/oder, falls vorhanden, die Schutz- und/oder andere Schicht auch stellenweise opak ausgebildet sein. Auf diese Weise sind weitere optische Gestaltungen des Kraftfahrzeugbauteils möglich. Die Sichtseite kann insbesondere ausserhalb der Lentikularlinsenstruktur angeordnete Bereiche aufweisen, welche je nach gewünschter optischer Gestaltung lichtdurchlässig oder lichtundurchlässig ausgebildet sein können.

Die vorliegende Erfindung bezieht sich ausserdem auf ein Kraftfahrzeug mit einem Kraftfahrzeugbauteil, das wie oben angegeben ausgebildet ist.

Des Weiteren bezieht sich die vorliegende Erfindung auf ein Verfahren zur Herstellung eines Kraftfahrzeugbauteils mit einer Sichtseite und einer Rückseite, welches insbesondere gemäss der obigen Beschreibung ausgebildet sein kann, wobei das Kraftfahrzeugbauteil einen Lichtleiter aufweist sowie eine Lentikularlinsenstruktur mit einer Vielzahl von Linsen, welche zur Sichtseite hin jeweils konvex ausgebildet sind, und wobei das Verfahren zumindest den folgenden Schritt aufweist:
- Ausbilden von Lichtumlenkstrukturen am und/oder im Lichtleiter zur Erzeugung eines am Kraftfahrzeugbauteil rückseitig und korrespondierend zur Lentikularlinsenstruktur angeordneten Lentikularbildes mit mindestens zwei ineinander verschachtelten Bildern zum Bewirken eines dreidimensionalen Effekts, einer Bewegung und/oder eines Bildwechsel.

Bevorzugt wird beim Verfahren zur Herstellung des Kraftfahrzeugbauteils ein Lichtleiter bereitgestellt, an bzw. in dem die Lichtumlenkstrukturen anschliessend oder gleichzeitig ausgebildet werden. Die Bereitstellung des Lichtleiters kann insbesondere mittels Herstellung des Lichtleiters im Spritzgussverfahren bewerkstelligt werden. Bevorzugt wird bei der Herstellung des Lichtleiters, insbesondere bei der Herstellung des Lichtleiters im Spritzgussverfahren, gleichzeitig die Lentikularlinsenstruktur hergestellt. In diesem Fall wird somit die Anordnung umfassend den Lichtleiter und die Lentikularlinsenstruktur einstückig hergestellt. Selbstverständlich kann die Lentikularlinsenstruktur, auch nach der Bereitstellung des Lichtleiters, an den Lichtleiter, bevorzugt mittels Spritzgussverfahren, angebracht werden. Falls die Lichtumlenkstrukturen gemeinsam, insbesondere gleichzeitig, mit dem Lichtleiter hergestellt werden, erfolgt die Herstellung bevorzugt im Spritzgussverfahren. Falls die Lichtumlenkstrukturen anschliessend zur Bereitstellung des Lichtleiters, an welchem bevorzugt bereits die Lentikularlinsenstruktur angebracht ist, ausgebildet werden, werden diese bevorzugt mittels eines Lasers und/oder eines Stempels hergestellt. Besonderes bevorzugt wird die Anordnung umfassend den Lichtleiter und die Lentikularlinsenstruktur gemeinsam im Spritzguss hergestellt und die Lichtumlenkstrukturen am und/oder im Lichtleiter dieser Anordnung mittels Laser hergestellt.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1a: eine schematische Querschnittsansicht eines Bauteils des Standes der Technik zur Erzeugung eines Lentikulareffekts;
- Fig. 1b: schematische Querschnittsansichten von Bildteilen des beim Bauteil der Fig. 1a verwendeten Lentikularbildes;
- Fig. 1c: schematische Querschnittsansichten der Bilder, welche beim Bauteil der Fig. 1a zur Ausbildung des Lentikularbildes ineinander verschachtelt sind;
- Fig. 2: eine schematische Querschnittsansicht eines erfindungsgemässen Kraftfahrzeugbauteils;
- Fig. 3: eine schematische Querschnittsansicht einer zur Herstellung eines erfindungsgemässen Kraftfahrzeugbauteils verwendeten Spritzgussform;
- Fig. 4: eine schematische Querschnittsansicht eines erfindungsgemässen Kraftfahrzeugbauteils bei der Herstellung mittels eines Lasers;
- Fig. 5: eine Draufsicht auf die Sichtseite eines erfindungsgemässen Kraftfahrzeugbauteils gemäss einer Gestaltungsvariante; sowie
- Fig. 6: eine Draufsicht auf die Sichtseite eines erfindungsgemässen Kraftfahrzeugbauteils gemäss einer anderen Gestaltungsvariante.

### BESCHREIBUNG BEVORZUGTER AUSFÜHRUNGSFORMEN

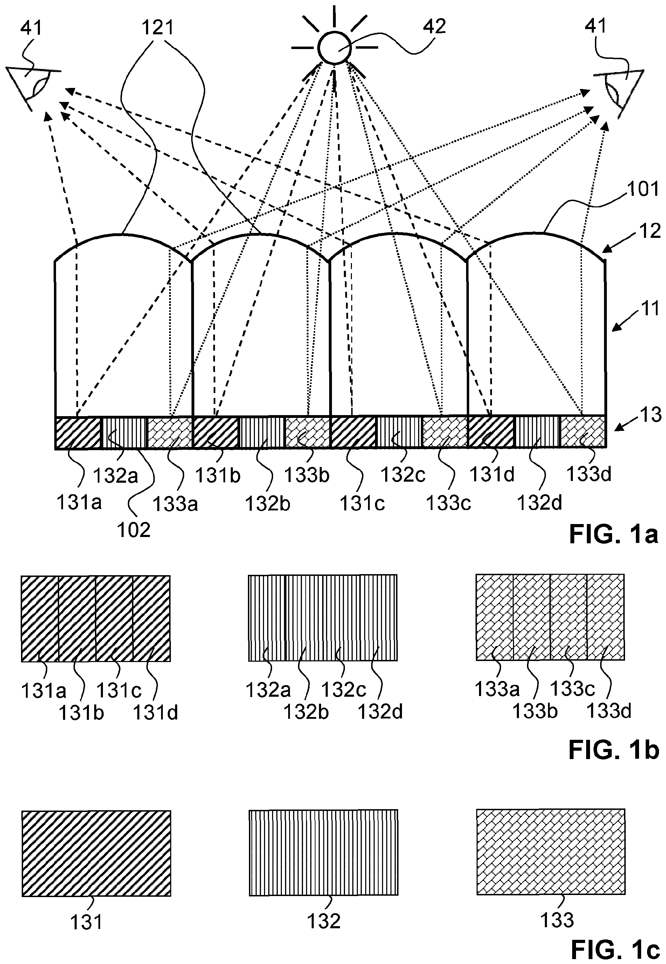

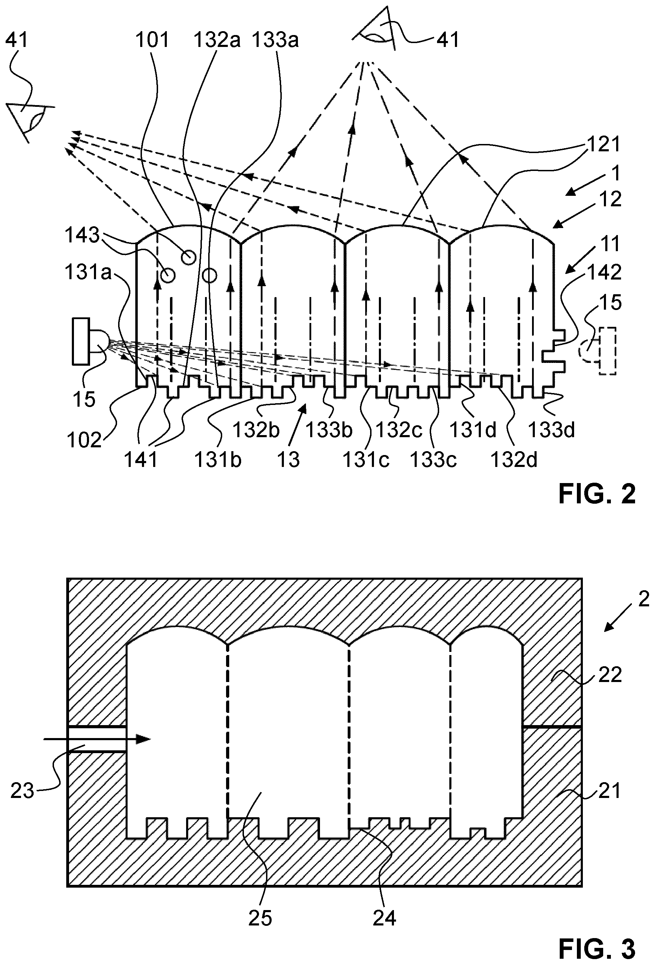

Die Figuren 1a bis 1c zeigen in verschiedenen Ansichten ein Bauteil des Standes der Technik sowie Teile davon zur Erzeugung eines Lentikulareffekts. In den Figuren 2 bis 6 sind unterschiedliche Ausführungsformen von erfindungsgemässen Kraftfahrzeugbauteilen sowie Varianten davon und bevorzugte Verfahren zu deren Herstellung beispielhaft illustriert. Merkmale, welche eine identische oder zumindest ähnliche Ausgestaltung und/oder Funktion aufweisen, sind in den Figuren 1a bis 6 jeweils mit denselben Bezugszeichen versehen. Die dargestellten Ausführungsformen dienen lediglich zur Illustration von möglichen Varianten von erfindungsgemässen Bauteilen sowie deren Herstellverfahren. Einzelne oder mehrere Elemente der verschiedenen Ausführungsformen und Herstellverfahren sind beliebig mit den Elementen von anderen Ausführungsformen bzw. Herstellverfahren kombinierbar. Die dargestellten Ausführungsformen und Herstellverfahren sind in keiner Weise als einschränkend zu verstehen.

Die Figuren 1a bis 1c veranschaulichen das grundsätzliche Prinzip des Lentikulareffekts, wie es auch beim erfindungsgemässen Kraftfahrzeugbauteil zur Anwendung kommt. Das in der Figur 1a dargestellte Bauteil des Standes der Technik weist einen Lichtleiter 11 auf, der zu einer Sichtseite 101 des Bauteils hin eine Lentikularlinsenstruktur 12 bildet. Die Lentikularlinsenstruktur 12 weist eine Vielzahl von Linsen 121 auf, die jeweils zur Sichtseite 101 hin konvex, das heisst gewölbt, ausgebildet sind. In die Richtung senkrecht zur Bildebene erstrecken sich der Lichtleiter 11 und die Lentikularlinsenstruktur 12 mit unverändertem Querschnitt. Die Linsen 121 bilden dadurch mit ihren Oberflächen jeweils einen Teil einer Zylinderfläche, wobei sich die Längsmittelachse des Zylinders entlang der Längsrichtung der jeweiligen Linse erstreckt.

An der Rückseite des Lichtleiters 11 ist korrespondierend zur Lentikularlinsenstruktur 12 ein Lentikularbild 13 angeordnet. Da Lentikularbild 13 wird durch mehrere ineinander verschachtelte Bilder 131, 132, 133 gebildet, die schematisch in der Figur 1c gezeigt sind. Je nach Betrachtungsposition 41 sieht ein Betrachter zum Beispiel nur das Bild 131 oder nur das Bild 133. Die Bilder 131, 132, 133 können je nach gewünschter optischer Wirkung zum Beispiel aus unterschiedlichen Raumrichtungen aufgenommene Abbildungen desselben Gegenstandes oder Objekts sein. Auf diese Weise kann beim Betrachter ein dreidimensionaler Effekt bewirkt werden. Alternativ können die Bilder 131, 132, 133 auch eine Sequenz von Einzelbildern darstellen, die eine fortlaufende Bildfolge bilden, um bei einer Betrachtung der Einzelbilder kurz hintereinander ähnlich wie bei einem Daumenkino eine animierte Bewegung zu zeigen. Gemäss einer weiteren Alternative können die Bilder 131, 132, 133 auch einfach unterschiedliche Abbildungen darstellen, die nicht zur Darstellung eines dreidimensionalen Effekts oder einer Bewegung dienen. In allen erwähnten Fällen kann es sich bei den Bildern 131, 132, 133 jeweils beispielsweise um ein Foto oder um ein Rendering handeln, das einen realen Gegenstand zeigt oder z.B. ein zwei- oder dreidimensional dargestelltes Symbol oder Logo. Die Bilder 131, 132, 133 können zum Beispiel einen Gegenstand, eine Person, eine abstrakte Graphik oder ein Objekt, wie insbesondere ein Symbol oder Logo, darstellen.

Das Lentikularbild 13 kann, wie hier, drei ineinander verschachtelte Bilder 131, 132, 133 aufweisen. Es ist aber auch möglich, dass das Lentikularbild 13 lediglich zwei oder eine beliebige Anzahl mit mehr als drei ineinander verschachtelten Bilder aufweist.

Die Verschachtelung der Bilder 131, 132, 133 ist aus einer Zusammenschau der Figuren 1b und Fig. 1a erkennbar: Im Falle, dass die Lentikularlinsenstruktur 12 wie im vorliegenden Beispiel vier Linsen 121 aufweist, wird jedes der Bilder 131, 132, 133 jeweils streifenförmig in vier Bildteile 131a, 131b, 131c, 131d bzw. 132a, 132b, 132c, 132d bzw. 133a, 133b, 133c, 133d aufgeteilt (Figur 1b). Anschliessend wird jedes Bildteil eines jeweiligen Bildes 131, 132, 133 einer Linse 121 zugeordnet, wobei die Zuteilung anhand der Anordnung der Linse 121 in der Lentikularlinsenstruktur 12 und des Bildteils im entsprechenden Bild 131, 132, 133 erfolgt. Die Bildteile werden somit abwechselnd nebeneinander angeordnet, so dass das Lentikularbild 13 mit den ineinander verschachtelten Bildern 131, 132, 133 entsteht. Jeder der Linsen 121 wird also von jedem der Bilder 131, 132, 133 jeweils ein Bildteil zugeteilt, wie es in der Figur 1a dargestellt ist.

Aufgrund der optischen Eigenschaften der Linsen 121 sowie der korrespondierenden Ausbildung und Positionierung der Lentikularlinsenstruktur 12 mit dem Lentikularbild 13 werden die ineinander verschachtelten Bilder 131, 132, 133 in unterschiedliche Raumrichtungen abgebildet, so dass für den Betrachter je nach Betrachtungsposition 41 jeweils nur ein einzelnes der Bilder 131, 132, 133 erkennbar ist. Bei einer Betrachtungsposition 41 links oberhalb des Bauteils erreichen den Betrachter lediglich die von den Bildteilen 131a, 131b, 131c, 131d stammenden Lichtstrahlen des Bildes 131, wie in der Figur 1a mit gestrichelten Linien dargestellt ist. Bei einer Betrachtungsposition 41 rechts oberhalb des Bauteils hingegen erreichen den Betrachter lediglich die von den Bildteilen 133a, 133b, 133c, 133d stammenden Lichtstrahlen des Bildes 133, wie in der Figur 1a mit punktierten Linien dargestellt ist. Die Lentikularlinsenstruktur 12 sorgt also dafür, dass der Betrachter in Abhängigkeit seiner Betrachtungsposition 41 entweder nur das erste oder nur das zweite oder nur das dritte der ineinander verschachtelten Bilder 131, 132, 133 des Lentikularbildes 13 erkennt. Das Licht gelangt dabei üblicherweise von einer externen Lichtquelle 42, wie zum Beispiel der Sonne, in den Lichtleiter 11 und wird vom Lentikularbild 13 entsprechend seiner Farbgebung gefiltert und zur Sichtseite 101 hin umgelenkt.

Wenn bzgl. der blickwinkelabhängigen Erkennbarkeit der ineinander verschachtelten Bilder 131, 132, 133 bei der Ausgestaltung der Lentikularlinsenstruktur 12 und des Lentikularbildes 13 ausserdem der Abstand der beiden Augen des Betrachters mitberücksichtigt wird, kann die Erkennbarkeit der Bilder gerade so eingestellt werden, dass für das eine Auge ein erstes Bild und für das andere Auge ein zweites Bild des Lentikularbildes 13 sichtbar ist. Bei geeigneter stereoskopischer Aufnahme dieser beiden Bilder kann dadurch beim Betrachter ein dreidimensionaler Effekt erzeugt werden.

Der Lichtleiter 11 ist gemeinsam mit der Lentikularlinsenstruktur 12 einstückig und aus einem durchwegs in Bezug auf die optischen Eigenschaften homogenen Material hergestellt. Die in der Figur 1a erkennbaren vertikalen Linien welche im Inneren des Lichtleiters 11 zwischen jeweils zwei benachbarten Linsen 121 eingezeichnet sind, dienen lediglich zur Veranschaulichung der korrespondierenden Anordnung des Lentikularbildes 13 und der Lentikularlinsenstruktur 12. Bei einem real hergestellten Bauteil sind derartige Linien in der Regel aber nicht vorhanden.

In der Figur 2 ist nun ein Ausführungsbeispiel eines erfindungsgemässen Kraftfahrzeugbauteils 1 gezeigt. Das Kraftfahrzeugbauteil 1 der Figur 2 wird nachfolgend anhand der Unterschiede zu dem in der Figur 1a gezeigten Bauteil beschrieben.

Beim Kraftfahrzeugbauteil 1 der Figur 2 wird das Lentikularbild 13 nicht wie beim Bauteil der Figur 1 durch Anordnung einer herkömmlichen, zweidimensionalen Abbildung an der Rückseite des Lichtleiters 11 vorgesehen, sondern mittels einer Vielzahl von Lichtumlenkstrukturen 141, welche am Lichtleiter 11 vorgesehen sind. Die Lichtumlenkstrukturen 141 werden dabei durch lokale Erhebungen und/oder Vertiefungen der Rückseite des Lichtleiters 11 gebildet. Somit bildet der Lichtleiter 11 mit seiner rückseitigen Aussenfläche das Lentikularbild 13. Da der Lichtleiter 11 einerseits einstückig mit der Lentikularlinsenstruktur 12 hergestellt ist und andererseits mit seiner Rückseite das Lentikularbild bildet, besteht kein Risiko, dass die Lentikularlinsenstruktur 12 zum Beispiel herstellungsbedingt oder aufgrund einer mechanischen äusseren Einwirkung beim Gebrauch relativ zum Lentikularbild 13 verschoben sein könnte. Für den Betrachter sind kleinste Verschiebungen des Lentikularbildes 13 relativ zur Lentikularlinsenstruktur 12 unmittelbar insbesondere deshalb erkennbar, weil sie zu einer erheblichen Beeinträchtigung des optischen Effekts führen. Indem der Lichtleiter 11 mit seiner Rückseite das Lentikularbild 13 bildet, kann eine präzise und unveränderbare Anordnung der einzelnen Bildteile 131a, 132a, 133a, 132b, 133b etc. in Bezug auf die Lentikularlinsenstruktur 12 erreicht werden. In der Ansicht der Figur 2 sind die den jeweiligen Bildteilen 131a-133d zugeordneten Teile des Lichtleiters 11 zur Veranschaulichung jeweils mit strichpunktierten Linien voneinander getrennt.

Bei der Ausführungsform der Figur 2 weist das Kraftfahrzeugbauteil 1 eine oder mehrere Leuchtdioden 15 auf, welche zum seitlichen Einstrahlen von Licht in den Lichtleiter 11 ausgebildet sind. Durch die Anordnung der Leuchtdioden 15 jeweils seitlich zum Lichtleiter 11 tragen diese nicht zusätzlich zur Bauhöhe des Kraftfahrzeugbauteils 1 bei. Durch das Vorsehen der Leuchtdioden 15 ist die Ausleuchtung des Kraftfahrzeugbauteils 1 zudem unabhängig von der externen Beleuchtung. Je nach Ausführungsform kann/können die Leuchtdiode 15 bzw. die mehrere Leuchtdioden 15 auch in einer Vertiefung angeordnet sein, die in einer Seitenfläche des Lichtleiters 11 ausgebildet ist. Die Leuchtdiode(n) 15 ist/sind dadurch besser geschützt. Anstelle oder zusätzlich zu einer oder mehreren Leuchtdioden 15 können als Leuchtelement bzw. Leuchtelemente auch eine oder mehrere Leuchtfolien, insbesondere Elektrolumineszenzfolien, OLEDs und/oder Glühbirnen vorgesehen sein.

Das oder die Leuchtdioden 15 können zum Einstrahlen von weissem oder von farbigem Licht ausgebildet sein. Durch das Einstrahlen von farbigem Licht, insbesondere von Licht in unterschiedlichen, sich ändernden Farben, kann die Aufmerksamkeit des Betrachters noch stärker auf das Kraftfahrzeugbauteil gelenkt werden.

Beispielhafte Strahlengänge des Lichts von einer der Leuchtdioden 15 zu den Lichtumlenkstrukturen 141 und via die Sichtseite 101 zu zwei möglichen Betrachtungspositionen 41 sind in der Figur 2 mit gestrichelten Linien dargestellt. Wie ersichtlich ist, lenken die Lichtumlenkstrukturen 141 das seitlich in den Lichtleiter 11 eingekoppelte Licht jeweils zur Sichtseite 101 hin um. Mittels einer entsprechenden Ausgestaltung und/oder Dimensionierung der individuellen Lichtumlenkstrukturen 141 und/oder durch Variation der Dichte der Lichtumlenkstrukturen 141 kann stellenweise mehr oder weniger Licht via die Sichtseite 101 zum Betrachter hin abgestrahlt werden. Auf diese Weise kann ein Hell/Dunkel-Bild erzeugt werden, das einem Graustufenbild entspricht und somit beliebige Gegenstände, Personen, Objekte und/oder Szenerien oder auch Symbole, Logos und/oder Schriftzüge darstellen kann.

Alternativ oder zusätzlich können die zur Ausbildung des Lentikularbildes 13 dienenden Lichtumlenkstrukturen 141 auch vollständig im Inneren des Lichtleiters 11 angeordnet sein. In diesem Fall sind die Lichtumlenkstrukturen 141 bevorzugt mit Hilfe eines Lasers hergestellt und können insbesondere entsprechend den Angaben im Dokument WO 2017/174548 A1 ausgebildet sein.

Die Lichtumlenkstrukturen 141 sind bevorzugt derart ausgestaltet, dimensioniert und/oder bzgl. ihrer Dichte angeordnet, dass ungeachtet der zu erzielenden Graustufenwerte über das gesamte Kraftfahrzeugbauteil 1 eine gleichmässige Lichtabstrahlung zur Sichtseite 101 hin resultiert. Dies kann insbesondere bedeuten, dass Lichtumlenkstrukturen 141 in Regionen, die näher bei einer Leuchtdiode 15 angeordnet sind, tendenziell anteilsmässig eher weniger Licht zur Sichtseite 101 hin umlenken als Lichtumlenkstrukturen 141, die in weiter weg angeordneten Regionen angeordnet sind.

Um die Lichteinkopplung in den Lichtleiter 11 zu verbessern und/oder um das eingestrahlte Licht zum Beispiel gleichmässiger oder hinsichtlich einer gleichmässigen Abstrahlung optimaler über die Lichtumlenkstrukturen 141 zu verteilen, kann der Lichtleiter 11 im Bereich einer Lichteinkoppelfläche weitere Lichtumlenkstrukturen 142 aufweisen, die insbesondere an einer Seitenfläche des Lichtleiters 11 angeordnet sein können.

Um weitere optische Effekte zu erzielen, können im Inneren des Lichtleiters 11 und/oder der Lentikularlinsenstruktur 12 noch weitere innere Lichtumlenkstrukturen 143 vorgesehen sein.

Die Rückseite des Lichtleiters 11 bildet bei der vorliegenden Ausführungsform gleichzeitig eine Rückseite 102 des Kraftfahrzeugbauteils 1. In anderen Ausführungsformen kann die Rückseite 102 aber auch durch andere Elemente des Kraftfahrzeugbauteils 1 gebildet werden, wie beispielsweise einem Gehäuse.

Die Herstellung eines Kraftfahrzeugbauteils 1 aus einem Kunststoffmaterial im Spritzgussverfahren wird in der Figur 3 veranschaulicht. Dabei werden in einem einzigen Schritt der Lichtleiter 11, die Lentikularlinsenstruktur 12 und das Lentikularbild 13 gemeinsam hergestellt. Eine derart hergestellte, insgesamt einstückig ausgebildete Bauteilkomponente bildet dann sowohl den Lichtleiter 11, die Lentikularlinsenstruktur 12 und das Lentikularbild 13.

Zur Herstellung des Kraftfahrzeugbauteils 1 im Spritzgussverfahren wird eine Gussform 2 mit einem unteren Formteil 21 und einem oberen Formteil 22 verwendet. Das obere Formteil 22 wird dichtend auf das untere Formteil 21 aufgesetzt, so dass sich zwischen den beiden Formteilen 21, 22 eine Kavität 25 bildet, in welche das erwärmte und deshalb flüssige Kunststoffmaterial durch eine Einspritzöffnung 23 hindurch eingespritzt werden kann. Das obere Formteil 22 bildet auf seiner der Kavität 25 hin gewandten Innenseite eine Vielzahl von Wölbungen, welche zum Ausbilden der Lentikularlinsenstruktur 12 dienen. Auf der gegenüberliegenden Seite bildet das untere Formteil 21 mit seiner der Kavität 25 hin gewandten Innenseite eine Reliefstruktur 24, welche einer Negativform der am Lichtleiter 11 auszubildenden lokalen Vertiefungen und/oder Erhebungen zur Formung der Lichtumlenkstrukturen 141 entspricht.

Nach dem Einspritzen des Kunststoffmaterials in die Kavität 25, wird dieses abgekühlt und ausgehärtet. Die Gussform 2 kann sodann geöffnet und die fertig hergestellte Bauteilkomponente, welche je nachdem auch gleich das fertige Kraftfahrzeugbauteil 1 bilden kann, entformt werden.

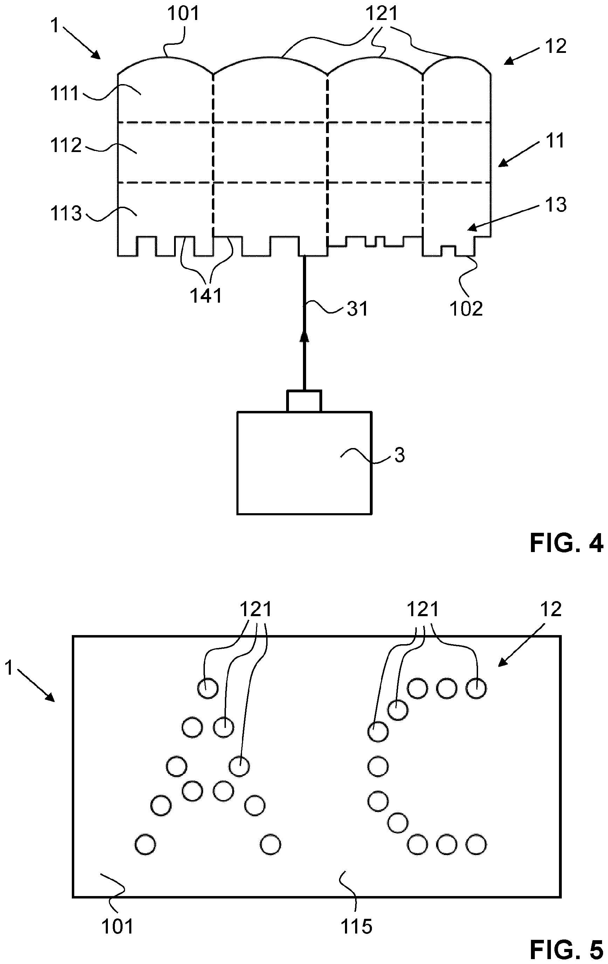

In der Figur 4 ist eine andere Herstellart gezeigt, bei welcher in einem ersten Schritt der Lichtleiter 11 mit der daran angeformten Lentikularlinsenstruktur 12 bereitgestellt, insbesondere hergestellt wird. In einem zweiten Schritt werden dann an der Rückseite des Lichtleiters 11 mittels eines Lasers 3 die lokalen Erhebungen und/oder Vertiefungen erzeugt, welche die Lichtumlenkstrukturen 141 zur Bildung des Lentikularbildes 13 bilden. Zur Ausbildung dieser lokalen Erhebungen und/oder Vertiefungen wird mit Hilfe des Lasers 3 die Rückseite des Lichtleiters 11 mit einem Laserstrahl 31 bestrahlt, um dadurch die Lichtumlenkstrukturen 141 einzeln zu erzeugen. Die Verwendung eines Lasers 3 erlaubt die Herstellung von Lichtumlenkstrukturen 141 mit einer besonders hohen Genauigkeit. Im Vergleich zur Herstellung im Spritzgussverfahren (siehe Figur 3) können die Lichtumlenkstrukturen 141 mit Hilfe des Lasers 3 zudem kleiner dimensioniert werden, wodurch zum Beispiel die Herstellung eines Lentikularbildes 13 mit grosser Auflösung möglich wird.

Wie in der Figur 4 mit gestrichelten horizontalen Linien veranschaulicht wird, kann der Lichtleiter 3 in drei funktionelle Segmente oder Schichten unterteilt werden: Ein oberes Segment 111, welches die Lentikularlinsenstruktur 12 bildet, ein mittleres Segment 112, welches die Lichtleitfunktion erfüllt, sowie ein unteres Segment 113, welches das Lentikularbild 13 bildet. Die drei Segmente oder Schichten 111, 112, 113 sind bevorzugt, wie hier, gemeinsam einstückig aus demselben Material, bevorzugt einem Kunststoffmaterial, ausgebildet. Denkbar sind aber auch Ausführungsformen, bei denen die drei Segmente 111, 112, 113, das heisst die Lentikularlinsenstruktur 12, der Lichtleiter 11 und das Lentikularbild 13 von unterschiedlichen Bauteilelementen gebildet werden, welche bei der Herstellung dauerhaft aneinander angebracht, wie zum Beispiel miteinander verklebt, werden, oder welche später noch voneinander separierbar sind. Die Lentikularlinsenstruktur 12 und der Lichtleiter 11 können dabei auch beabstandet zueinander angeordnet sein.

Die Figur 5 zeigt eine Ausführungsform eines Kraftfahrzeugbauteils 1, bei dem die Linsen 121 der Lentikularlinsenstruktur 12 nicht wie sonst üblich, in der Draufsicht jeweils streifenförmig ausgestaltet und unmittelbar angrenzend zueinander angeordnet sind, sondern bei dem sie jeweils kreisförmig ausgestaltet und derart in Abständen zueinander angeordnet sind, dass sie gemeinsam einen Buchstaben bzw. einen Schriftzug bilden. Ein lichtdurchlässiger Bereich 115 umgibt die Linsen 121 und bildet gemeinsam mit diesen die Sichtseite 101 des Kraftfahrzeugbauteils. Im Gegensatz zu den Linsen 121 ist der lichtdurchlässige Bereich 115 bevorzugt aber optisch nicht aktiv. Auf diese Weise können weitere optische Effekte erzeugt und die Aufmerksamkeit des Betrachters auf das Kraftfahrzeugbauteil 1 gelenkt werden. Beispielsweise kann der durch die Anordnung der Linsen 121 dargestellte Schriftzug in Abhängigkeit der Betrachtungsposition in unterschiedlichen Helligkeiten oder Helligkeitsverteilungen erscheinen. Das Lentikularbild 13 würde dann bei einer Veränderung der Betrachtungsposition also einen Bildwechsel bewirken, welcher für den Betrachter in Form einer anderen Helligkeit oder einer veränderten Helligkeitsverteilung wahrgenommen würde.

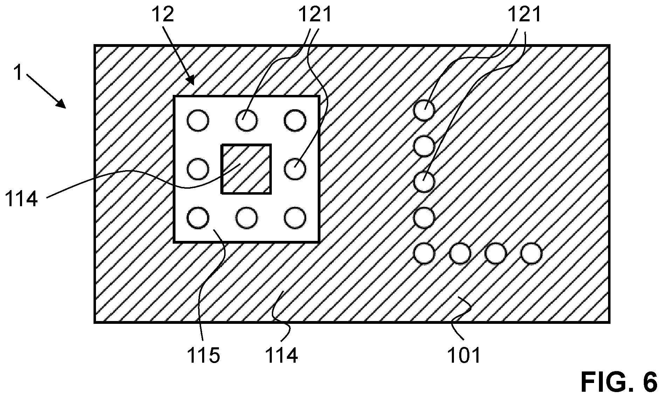

Bei der Ausführungsform der Figur 6 ist mit den kreisrunden und beabstandet zueinander angeordneten Linsen 121 ähnlich wie diejenige der Figur 5. Jedoch weist die Sichtseite 101 hier ausserhalb der Linsen 121 nicht nur einen lichtdurchlässigen Bereich 115, sondern auch opake Bereiche 114 auf. Auf der linken Hälfte der in der Figur 6 gezeigten Sichtseite 101 sind die Linsen 121 jeweils innerhalb eines lichtdurchlässigen Bereiches 115 angeordnet, welcher nach innen und nach aussen jeweils von einem opaken Bereich 114 umrandet ist. Auf diese Weise können die Linsen 121 der Lentikularlinsenstruktur 12 in der Wahrnehmung des Betrachters besonders hervorgehoben werden. Insbesondere kann dadurch zum Beispiel ein von den Linsen 121 gebildetes Symbol eine Corona, das heisst eine Umstrahlung, aufweisen. Auf der rechten Hälfte der in der Figur 6 gezeigten Sichtseite 101 sind die Linsen 121 hingegen innerhalb eines opaken Bereiches 114 angeordnet und seitlich von diesem umrandet. In der Wahrnehmung des Betrachters erscheinen die Linsen 121 der Lentikularlinsenstruktur 12 dadurch besonders hell und hervorgehoben.

Die vorliegende Erfindung ist selbstverständlich nicht auf die vorstehend beschriebenen und in den Figuren gezeigten Ausführungsformen und Varianten beschränkt, sondern eine Vielzahl von Abwandlungen und Modifikationen ist möglich. So können die Merkmale der verschiedenen Ausführungsformen selbstverständlich auf andere Ausführungsformen übertragen, weggelassen und/oder ausgetauscht werden. So müssen die Lichtumlenkstrukturen 141, welche das Lentikularbild 13 bilden, zum Beispiel nicht zwingend in Form von lokalen Erhebungen und/oder Vertiefungen an der Rückseite des Lichtleiters 11 ausgebildet sein. Genauso gut können sie zum Beispiel an der Vorderseite oder im Inneren des Lichtleiters 11 vorgesehen sein. Durch eine Anordnung im Inneren des Lichtleiters 11 wären die Lichtumlenkstrukturen 141 sogar noch besser vor externen Einflüssen geschützt. Die Lichteinstrahlung in den Lichtleiter 11 muss nicht unbedingt durch eine oder mehrere Leuchtdioden 15 bewerkstelligt werden. Stattdessen können genauso wie beim Bauteil der Figur 1a das Umgebungslicht und insbesondere Sonnenlicht genutzt werden. Falls eine oder mehrere Leuchtdioden 15 vorhanden sind, könnten diese das Licht auch von der Rückseite und/oder von der Vorderseite her einstrahlen. Als weitere Abwandlung könnte das Lentikularbild 13 eine viel grössere Anzahl an ineinander verschachtelten Bildern aufweisen. So wäre es, insbesondere aufgrund der präzisen Herstellung mittels eines Lasers 3, zum Beispiel denkbar, dass das Lentikularbild 13 mindestens 10, mindestens 20 oder sogar mindestens 40 ineinander verschachtelte Bilder aufweist. Des Weiteren muss die Lentikularlinsenstruktur 12 mit ihrer Oberfläche nicht die Sichtseite 101 des Kraftfahrzeugbauteils bilden, sondern es könnte je nachdem auch von Vorteil sein, wenn die Lentikularlinsenstruktur 12 teilweise oder vollständig von einer weiteren Schicht, wie insbesondere einer Schutzschicht überzogen ist. Die weitere Schicht könnte auch einfach dazu dienen, das Bauteil zur Sichtseite hin mit einer ebenen Oberfläche zu versehen. Eine Vielzahl weiterer Abwandlungen ist denkbar.

### BEZUGSZEICHENLISTE

- 1: Kraftfahrzeugbauteil
- 101: Sichtseite
- 102: Rückseite

- 11: Lichtleiter
- 111: Oberes Segment
- 112: Mittleres Segment
- 113: Unteres Segment
- 114: Opaker Bereich
- 115: Lichtdurchlässiger Bereich

- 12: Lentikularlinsenstruktur
- 121: Linse

- 13: Lentikularbild
- 131: Bild
- 131a, 131b, 131c, 131d: Bildteil
- 132: Bild
- 132a, 132b, 132c, 132d: Bildteil
- 133: Bild
- 133a, 133b, 133c, 133d: Bildteil

- 141: Lichtumlenkstruktur
- 142: Lichtumlenkstruktur
- 143: Innere Lichtumlenkstruktur

- 15: Leuchtdiode

- 2: Gussform
- 21: Unteres Formteil
- 22: Oberes Formteil
- 23: Einspritzöffnung
- 24: Reliefstruktur
- 25: Kavität

- 3: Laser
- 31: Laserstrahl

- 41: Betrachtungsposition
- 42: Externe Lichtquelle

## Patentansprüche

1. Kraftfahrzeugbauteil (1) mit einer Sichtseite (101) und einer Rückseite (102), aufweisend
einen Lichtleiter (11),
eine Lentikularlinsenstruktur (12) mit einer Vielzahl von Linsen (121), welche zur Sichtseite (101) hin jeweils konvex ausgebildet sind, sowie
ein rückseitig und korrespondierend zur Lentikularlinsenstruktur (12) angeordnetes Lentikularbild (13) mit mindestens zwei ineinander verschachtelten Bildern (131, 132, 133) zum Bewirken eines dreidimensionalen Effekts, einer Bewegung und/oder eines Bildwechsels,
**dadurch gekennzeichnet, dass**
das Lentikularbild (13) mittels Lichtumlenkstrukturen (141, 143) gebildet wird, welche am und/oder im Lichtleiter (11) vorgesehen sind.

2. Kraftfahrzeugbauteil (1) nach Anspruch 1, ausserdem aufweisend eines oder mehrere Leuchtelemente, insbesondere eine oder mehrere Leuchtdioden (15), zum Einstrahlen von Licht in den Lichtleiter (11).

3. Kraftfahrzeugbauteil (1) nach Anspruch 2, wobei das eine oder die mehreren Leuchtelemente jeweils dazu ausgebildet sind, das Licht seitlich in den Lichtleiter (11) einzustrahlen.

4. Kraftfahrzeugbauteil (1) nach einem der vorhergehenden Ansprüche, wobei der Lichtleiter (11) und die Lentikularlinsenstruktur (12) gemeinsam einstückig ausgebildet sind.

5. Kraftfahrzeugbauteil (1) nach einem der vorhergehenden Ansprüche, wobei die Lichtumlenkstrukturen (141, 143) durch den Lichtleiter (11) gebildet werden.

6. Kraftfahrzeugbauteil (1) nach einem der vorhergehenden Ansprüche, wobei die Lichtumlenkstrukturen (141) durch lokale Erhebungen und/oder Vertiefungen einer Oberfläche, insbesondere der Rückseite, des Lichtleiters (11) gebildet werden.

7. Kraftfahrzeugbauteil (1) nach einem der vorhergehenden Ansprüche, wobei der Lichtleiter (11) und die Lichtumlenkstrukturen (141) gemeinsam im Spritzgussverfahren hergestellt sind.

8. Kraftfahrzeugbauteil (1) nach einem der vorhergehenden Ansprüche, wobei die Lichtumlenkstrukturen (141, 143) mittels eines Lasers (3) und/oder mittels Einpressen eines Stempels hergestellt sind.

9. Kraftfahrzeugbauteil (1) nach einem der vorhergehenden Ansprüche, wobei zumindest eines, bevorzugt alle, der mindestens zwei ineinander verschachtelten Bilder (131, 132, 133) ein Logo, wie insbesondere eine Kraftfahrzeugmarke, darstellen.

10. Kraftfahrzeugbauteil (1) nach einem der vorhergehenden Ansprüche, ausserdem aufweisend zusätzliche Lichtumlenkstrukturen (143), die im Inneren des Lichtleiters (11) angeordnet sind.

11. Kraftfahrzeugbauteil (1) nach einem der vorhergehenden Ansprüche, wobei die Linsen (121) der Lentikularlinsenstruktur (12) jeweils einzeln und/oder gemeinsam ein Symbol und/oder einen Schriftzug bilden.

12. Kraftfahrzeugbauteil (1) nach einem der vorhergehenden Ansprüche, wobei die Sichtseite (101) Bereiche (114, 115) aufweist, welche ausserhalb der Lentikularlinsenstruktur (12) angeordnet sind, und welche bevorzugt lichtdurchlässig oder lichtundurchlässig ausgebildet sind.

13. Kraftfahrzeug aufweisend ein Kraftfahrzeugbauteil (1) nach einem der vorhergehenden Ansprüche.

14. Verfahren zur Herstellung eines Kraftfahrzeugbauteils (1) mit einer Sichtseite (101) und einer Rückseite (102), welches insbesondere nach einem der vorhergehenden Ansprüchen ausgebildet ist, wobei das Kraftfahrzeugbauteil (1) einen Lichtleiter (11) aufweist sowie eine Lentikularlinsenstruktur (12) mit einer Vielzahl von Linsen (121), welche zur Sichtseite (101) hin jeweils konvex ausgebildet sind, und wobei das Verfahren zumindest den folgenden Schritt aufweist:
- Ausbilden von Lichtumlenkstrukturen (141, 143) am und/oder im Lichtleiter (11) zur Erzeugung eines am Kraftfahrzeugbauteil (1) rückseitig und korrespondierend zur Lentikularlinsenstruktur (12) angeordneten Lentikularbildes (13) mit mindestens zwei ineinander verschachtelten Bildern (131, 132, 133) zum Bewirken eines dreidimensionalen Effekts, einer Bewegung und/oder eines Bildwechsel.

15. Verfahren nach Anspruch 14, wobei die Lichtumlenkstrukturen (141) gemeinsam mit dem Lichtleiter im Spritzgussverfahren, mittels eines Lasers (3) und/oder mittels eines Stempels hergestellt werden.
